# EUROPEAN PATENT APPLICATION

(11) **EP 4 485 554 A1**
(43) Date of publication of application: **01.01.2025**
(21) Application number: 23756699.7
(22) Date of filing: 21.02.2023
(51) Int. Cl.: H01M 4/04, B65H 35/04

(54) **ELECTRODE CUTTING DEVICE AND METHOD**

(30) Priority: 21.02.2022 KR 20220022579
(71) Applicant: LG Energy Solution, Ltd., Seoul 07335 (KR)
(72) Inventor: LEE, Su Ho, Daejeon 34122 (KR)
(74) Representative: Goddar, Heinz J.
(86) International application number: PCT/KR2023/002462
(87) International publication number: WO 2023/158287

(57) **Abstract**

The present invention relates to an apparatus and method for cutting an electrode. An apparatus for cutting an electrode according to an embodiment of the present invention may include: a cutter that cuts an electrode sheet into unit electrodes; and a first gripper and a second gripper that are disposed in front of the cutter and fix the electrode sheet at both sides, respectively, in response to an operation of the cutter, wherein the first gripper includes a first area and a second area disposed at at least one side of the first area, and the first area of the first gripper further protrudes toward the second gripper than the second area does.

## Description

### TECHNICAL FIELD

### CROSS-REFERENCE TO RELATED APPLICATION

The present application claims the benefit of the priority of Korean Patent Application No. 10-2022-0022579, filed on February 21, 2022, which is hereby incorporated by reference in its entirety.

### TECHNICAL FIELD

The present invention relates to an apparatus and method for cutting an electrode, and more particularly, to an apparatus and method for cutting an electrode, capable of minimizing an occurrence of displacement of an electrode sheet.

### BACKGROUND ART

A demand for secondary batteries as energy sources for electronic devices such as mobile phones, notebook computers, and wearable devices, and electric vehicles, etc., increases. According to the type of an electrode, the secondary batteries are classified into nickel-cadmium secondary batteries, nickel-hydrogen secondary batteries, lithium secondary batteries, and the like, and research on and development for the lithium secondary batteries, which have advantages such as a high operating voltage and a high energy density per unit weight, are actively carried out.

In general, the secondary batteries may include an electrode assembly and a case in which the electrode assembly is embedded. The electrode assembly may have a structure in which a positive electrode and a negative electrode are sequentially stacked with a separator therebetween. A unit electrode such as the positive electrode and the negative electrode, may be manufactured by cutting an electrode sheet, which is made by applying an electrode active material, to have a unit electrode length. When cutting, a gripper that grips the electrode sheet may be in direct contact with waves (or wrinkles) of the electrode sheet, which occur during a roll press process, and thus, a defect in which the electrode sheet is displaced may occur. In addition, as the gripper displaced by an assembly tolerance of the gripper strongly presses the waves (or wrinkles) of the electrode sheet, the defect in which the electrode sheet is displaced may severely occur.

### DISCLOSURE OF THE INVENTION

### TECHNICAL PROBLEM

An embodiment of the present invention is to provide an apparatus and method for cutting an electrode, capable of minimizing an occurrence of displacement of an electrode sheet.

The technical objects of the present invention are not limited to the aforesaid, but other technical objects not described herein will be clearly understood by those skilled in the art from descriptions below.

### TECHNICAL SOLUTION

An apparatus for cutting an electrode according to an embodiment of the present invention may include: a cutter that cuts an electrode sheet into unit electrodes; and a first gripper and a second gripper that are disposed in front of the cutter to fix the electrode sheet at both sides, respectively, in response to an operation of the cutter, wherein the first gripper includes a first area and a second area disposed at at least one side of the first area, and the first area of the first gripper further protrudes toward the second gripper than the second area does.

According to an embodiment, the first gripper may press a top surface of the electrode sheet, and the second gripper may press a bottom surface of the electrode sheet.

According to an embodiment, the electrode sheet may include a central area and a peripheral area disposed at at least one side of the central area, and the first area of the first gripper may press the central area in addition to at least a portion of the peripheral area of the electrode sheet in response to an operation of the cutter.

According to an embodiment, the first gripper may include a protrusion disposed at at least a portion of the first area and protruding in a direction facing the second gripper.

According to an embodiment, a height difference between a bottom surface of the protrusion and a bottom surface of the second area of the first gripper may be 0.4 mm to 0.6 mm.

According to an embodiment, the protrusion may have a length that is less than a length of each of the unit electrodes.

According to an embodiment, the first gripper may include an opening portion that is disposed on the second area and is concave in a direction opposite to a direction facing the second gripper.

According to an embodiment, a height difference between a bottom surface provided by the opening portion and a bottom surface of the first area of the first gripper may be 4 mm to 6 mm.

A method for cutting an electrode according to an embodiment of the present invention may include: pressing and fixing an electrode sheet at both sides by a first gripper and a second gripper, respectively; and cutting the electrode sheet into unit electrodes by a cutter disposed behind the first gripper and the second gripper, wherein the first gripper includes a first area and a second area disposed at at least one side of the first area, and the first area of the first gripper further protrudes toward the second gripper than the second area does.

According to an embodiment, the electrode sheet may include a central area and a peripheral area disposed at at least one side of the central area, wherein the fixing of the electrode sheet includes pressing the central area other than the peripheral area of the electrode sheet by a protrusion disposed on the first area of the first gripper.

### ADVANTAGEOUS EFFECTS

According to the embodiment of the present invention, the first gripper may press the remaining area of the electrode sheet except for the peripheral area of the electrode sheet so that the first gripper avoids being in direct contact with the peripheral area of the electrode sheet. Accordingly, the present invention may prevent the positional defect (e.g., displacement) of the electrode sheet (or unit electrode) during the lamination process.

Moreover, according to the embodiment of the present invention, even when the displacement of the gripper caused by the assembly tolerance occurs, the direct contact between the gripper and the peripheral area of the electrode sheet may be avoided. Accordingly, the present invention may reduce the process defects likely to occur due to the displacement of the gripper.

In addition, the various effects directly or indirectly found through this document may be provided.

### BRIEF DESCRIPTION OF THE DRAWINGS

FIG. 1 is an exploded perspective view illustrating a secondary battery according to an embodiment of the present invention.
FIG. 2 is a view illustrating an apparatus for manufacturing a secondary battery according to an embodiment of the present invention.
FIG. 3 is a cross-sectional view illustrating a gripper included in a cutting apparatus according to an embodiment of the present invention.
FIGS. 4a and 4b are views for explaining an arrangement relationship between an electrode sheet and a gripper included in a cutting apparatus according to an embodiment of the present invention.
FIG. 5 is a view illustrating a gripper included in a cutting apparatus according to another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

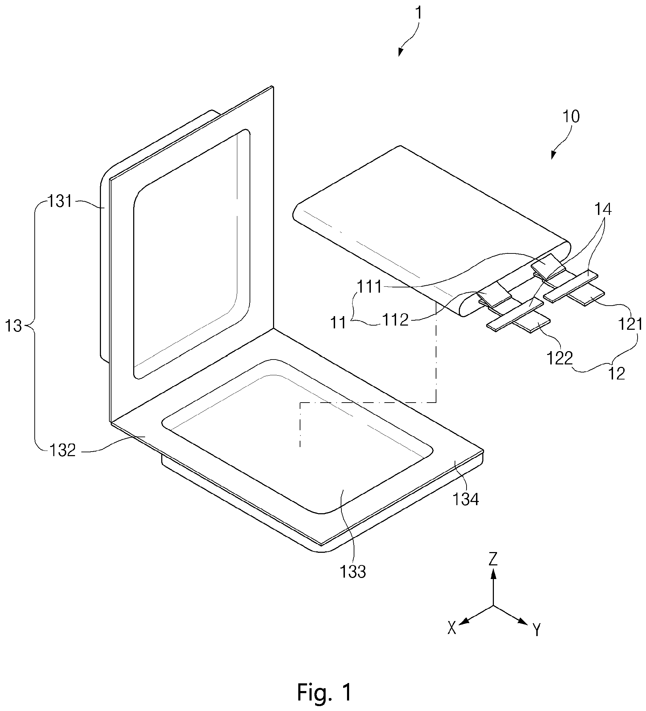

FIG. 1 is an exploded perspective view illustrating a secondary battery according to an embodiment of the present invention.

Referring to FIG. 1, a secondary battery 1 according to an embodiment of the present invention may include an electrode assembly 10 and a case 13 surrounding the electrode assembly 10.

The electrode assembly 10 is a power generation device, in which a positive electrode and a negative electrode are sequentially stacked in a state in which a separator is interposed therebetween, and may have a stacked type or stack and folding type structure. The separator included in the electrode assembly 10 may insulate the positive electrode and the negative electrode from each other.

The electrode assembly 10 may include a plurality of electrode tabs 11 extending from the electrode assembly 10. The electrode assembly 10 may include a positive electrode tab 111 and a negative electrode tab 112. The positive electrode tab 111 may extend from the positive electrode of the electrode assembly 10 to protrude to the outside of the electrode assembly 10. The negative electrode tab 112 may extend from the negative electrode of the electrode assembly 10 to protrude to the outside of the electrode assembly 10.

An electrode lead 12 may be connected to the electrode tab 11. For example, the electrode lead 12 may be connected to the electrode tab 11 through a welding process such as laser welding. The electrode lead 12 may include a positive electrode lead 121 and a negative electrode lead 122. According to a formed position of each of the positive electrode tab 111 and the negative electrode tab 112, the positive electrode lead 121 and the negative electrode lead 122 may extend in the same direction or may extend in opposite directions. The positive electrode lead 121 and the negative electrode lead 122 may have different materials. For example, the positive electrode lead 121 may have the same aluminum (Al) material as that of the positive electrode, and the negative electrode lead 122 may have the same copper (Cu) material as that of the negative electrode, or a copper material coated with nickel (Ni). A portion of the electrode lead 12, which protrudes to the outside of the case 13, may serve as a terminal portion to be electrically connected to an external terminal.

The electrode lead 12 may have a portion that is surrounded by an insulation part 14. The insulation part 14 may be disposed on a sealing part 134, on which an upper pouch 131 and a lower pouch 132 of the case 13 are thermally fused to each other, to bond the electrode lead 12 to the case 13. In addition, electricity generated from the electrode assembly 10 may be prevented from flowing to the case 13 through the electrode lead 12, and sealing of the case 13 may be maintained. The insulation part 14 is made of a nonconductor having non-conductivity, through which electricity does not flow well. A material, which is easily attached to the electrode lead 12 and has a relatively small thickness, may be used in the insulation part 14. For example, the insulation part 14 may be made of an insulation tape. The material of the insulation part 14 is not limited to the insulation tape, and various members may be used as long as the members are capable of insulating the electrode lead 12.

The case 13 provides an accommodation space capable of accommodating the electrode assembly 10, and has a pouch shape as a whole. The case 13 may accommodate and seal the electrode assembly 10 so that a portion of the electrode lead 12, i.e., the terminal portion, is exposed. The case 13 includes the upper pouch 131 and the lower pouch 132. The lower pouch 132 is provided with an accommodation space 133 capable of accommodating the electrode assembly 10, and the upper pouch 131 covers the accommodation space 133 at an upper side so that the electrode assembly 10 is not separated to the outside of the case 13. Here, the accommodation space 133 may be defined also in the upper pouch 131 to accommodate the electrode assembly 10 from the upper side. The upper pouch 131 and the lower pouch 132 may be manufactured so that respective sides of the upper pouch 131 and the lower pouch 132 are connected to each other, but an embodiment of the present invention is not limited thereto. For example, the upper pouch 131 and the lower pouch 132 may be manufactured in various manner such as being divided to be separately manufactured.

A unit electrode of at least one of the positive electrode and the negative electrode included in this electrode assembly 10 may be manufactured by coating a sheet-shaped electrode sheet with an active material, followed by drying and rolling, and then cutting the electrode sheet to have a fixed size.

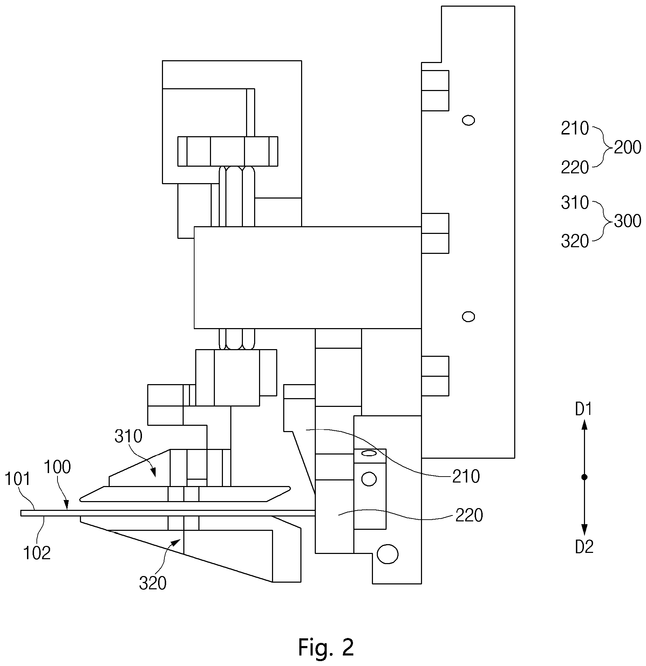

FIG. 2 is a view illustrating an apparatus for manufacturing a secondary battery according to an embodiment of the present invention. The manufacturing apparatus illustrated in FIG. 2 may be an apparatus for cutting an electrode.

Referring to FIG. 2, the apparatus for cutting the electrode according to an embodiment of the present invention may include a gripper 300 and a cutter 200.

The gripper 300 may be disposed in front of the cutter 200 in a direction in which an electrode sheet 100 is supplied. The gripper 300 may grip the electrode sheet 100 so that the electrode sheet 100 is cut by the cutter 200 in response to an operation of the cutter 200. When the cutter 200 cuts the electrode sheet 100 into unit electrodes, the gripper 300 may be in close contact with each of both surfaces of the electrode sheet 100 to limit movement of the electrode sheet 100. The gripper 300 may include a first gripper 310 and a second gripper 320. The first gripper 310 may be in contact with a top surface 101 (or a surface facing a first direction D1) of the electrode sheet 100 during the cutting of the electrode sheet 100. The second gripper 320 may be in contact with a bottom surface 102 (or a surface facing a second direction D2) of the electrode sheet 100 during the cutting of the electrode sheet 100.

At least one of the first gripper 310 or the second gripper 320 may move vertically (or in the first direction D1 and/or the second direction D2) so that the electrode sheet 100 is pressed. For example, the first gripper 310 may move toward the second gripper 320 in the second direction D2 in a state in which the second gripper 320 is fixed, so that the both surfaces of the electrode assembly 100 are pressed through the first and second grippers 310 and 320.

The cutter 200 may be disposed behind the gripper 300 in the direction in which the electrode sheet 100 is supplied. The cutter 200 may include a first cutter 210 and a second cutter 220. The first cutter 210 may be disposed to face the top surface 101 of the electrode sheet 100 with respect to the electrode sheet 100. The second cutter 220 may be disposed on the bottom surface 102 of the electrode sheet 100 with respect to the electrode sheet 100. At least one of the first cutter 210 or the second cutter 220 may perform an elevating motion at a cutting position of the electrode sheet 100. For example, when the electrode sheet 100 is transferred, the first cutter 210 may perform the elevating motion so that a cutter blade of the first cutter 210 and a cutter blade of the second cutter 220 are in contact with each other, and thus, the electrode sheet 100 may be cut.

According to an embodiment, the both surfaces of the electrode sheet 100 may be pressed by gripping (or holding) through the first gripper 310 and the second gripper 320. In a state in which the both surfaces of the electrode sheet 100 are pressed, the electrode sheet 100 may be cut into the unit electrodes through the cutter 200 using the first cutter 210 and the second cutter 220.

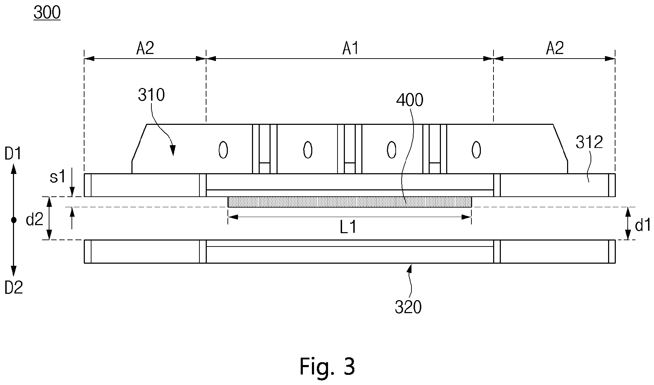

FIG. 3 is a cross-sectional view illustrating a gripper included in a cutting apparatus according to an embodiment of the present invention.

Referring to FIG. 3, a gripper 300 included in the cutting apparatus according to an embodiment of the present invention may include a first gripper 310 and a second gripper 320.

The first gripper 310 may be disposed to face the second gripper 320 so that the first gripper 310 is in contact with a top surface of an electrode sheet (e.g., the top surface 101 of the electrode sheet 100 in FIG. 2) during cutting of the electrode sheet. The first gripper 310 may include a first area A1 and a second area A2 adjacent to the first area A1. In more detail, a bottom surface of the first gripper 310, i.e., one surface facing the second gripper 320, may include the first area A1 and the second area A2.

The second area A2 may be provided at at least one side of the first area A1. For example, the second area A2 may be provided to surround the first area A1.

The first area A1 of the first gripper 310 may have at least a portion that further protrudes in the second direction D2 facing the second gripper 320 than the second area A2 does. The first gripper 310 may include a protrusion 400 disposed at at least a portion of the first area A1. The protrusion 400 may protrude from a gripper plate 312 of the first gripper 310 toward the second gripper 320. The protrusion 400 may protrude from the gripper plate 312 of the first gripper 310 to have a polygonal shape or to be provided so that at least a portion has a curvature. For example, the protrusion 400 may protrude from the gripper plate 312 of the first gripper 310 to have a rectangular shape.

The protrusion 400 may be made of the same material as or a different material from that of the gripper plate 312 of the first gripper 310. For example, the protrusion 400 may be made of the same material as that of the gripper plate 312 of the first gripper 310. The protrusion 400 made of the same material as that of the gripper plate 312 may be provided integrally with the gripper plate 312.

A bottom surface (e.g., a surface facing the second direction D2) of the protrusion 400 and a top surface (e.g., a surface facing the first direction D1) of the second gripper 320 may be spaced a first spaced distance d1 from each other during an electrode cutting process. A bottom surface of the second gripper 320, which is disposed on the second area A2 of the first gripper 310, and the top surface of the second gripper 320 may be spaced a second spaced distance d2 from each other during the electrode cutting process. The first spaced distance d1 may be different from the second spaced distance d2. The first spaced distance d1 may be provided to be less than the second spaced distance d2. During the electrode cutting process, the first spaced distance d1 may have a size that corresponds to a thickness of the electrode sheet (e.g., the electrode sheet 100 in FIG. 2), and the second spaced distance d2 may have a thickness that is greater than a thickness of the electrode sheet.

A height difference s1 (or stepped portion) between the bottom surface of the protrusion 400 and the gripper plate 312 disposed on the second area A2 of the first gripper 310 may correspond to a thickness of the protrusion 400. The height difference s1 between the bottom surface of the protrusion 400 and the gripper plate 312 disposed on the second area A2 of the first gripper 310 may be set in consideration of a thickness of a peripheral area of the electrode sheet. For example, the height difference s1 between the bottom surface of the protrusion 400 and the gripper plate 312 disposed on the second area A2 of the first gripper 310 may be 0.4 mm to 0.6 mm.

The protrusion 400 may be in contact with a partial area of the electrode sheet, which is fixed between the first gripper 210 and the second gripper 220 during the process of cutting the electrode sheet. The electrode sheet may include a central area and the peripheral area disposed at at least one side of the central area. The central area of the electrode sheet may be surrounded by the peripheral area of the electrode sheet.

The first area A1 of the first gripper 310, on which the protrusion 400 is disposed, may press the central area other than the peripheral area of the electrode sheet in response to an operation of a cutter (e.g., the cutter 200 in FIG. 2). The protrusion 400 may not be in contact with the peripheral area of the electrode sheet and may be in contact with the central area of the electrode sheet. The protrusion 400 may have a size that is less than a size of a unit electrode, which is cut by the cutter, and/or the gripper plate 312. The protrusion 400 may have a length L1 that is less than a length of the unit electrode. As an example, the length L1 of the protrusion 400 may be provided to be about half the length of the unit electrode.

As above, the bottom surface of the protrusion 400, which is disposed on the first area A1 of the first gripper 310, may be in contact with the electrode sheet during the electrode cutting process. The gripper plate 312 disposed on the second area A2 of the first gripper 320 may not be in contact with the electrode sheet during the electrode cutting process.

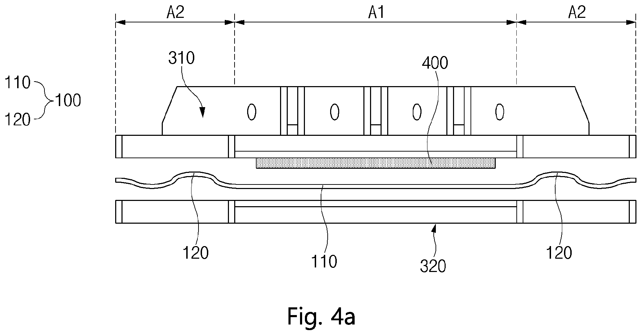

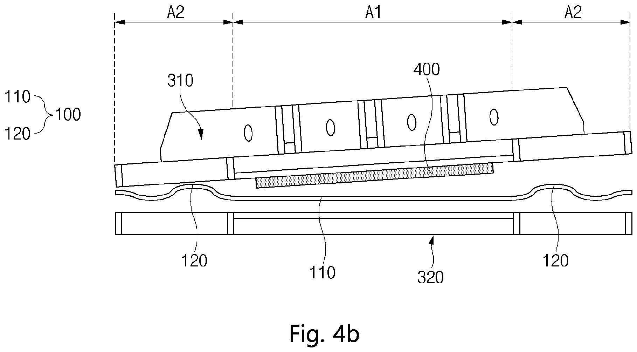

FIGS. 4a and 4b are views for explaining an arrangement relationship between an electrode sheet and a gripper included in a cutting apparatus according to an embodiment of the present invention.

Referring to FIGS. 4a and 4b, an electrode sheet 100 may include a central area 110 and a peripheral area 120. The central area 110 of the electrode sheet 100 may have at least a portion that corresponds to a first area A1 of a first gripper 310. The peripheral area 120 of the electrode sheet 100 may have at least a portion that corresponds to a second area A2 of the first gripper 310. The central area 110 of the electrode sheet 100 may have a uniform surface. The peripheral area 120 of the electrode sheet 100 may have a surface that is relatively non-uniform compared to that of the central area 110 of the electrode sheet 100. In the peripheral area 120 of the electrode sheet 100, waves (or wrinkles) may occur in a process (e.g., an electrode roll press process) before the cutting process so that the surface of the peripheral area 120 of the electrode sheet 100 is non-uniform.

During the process of cutting the electrode sheet 100, a protrusion 400 of the first gripper 310 may press the electrode sheet 100. The protrusion 400 of the first gripper 310 may press the central area 110 of the electrode sheet 100. The protrusion 400 of the first gripper 310 may be provided to avoid the peripheral area 120 of the electrode sheet 100, in which waves are most likely to occur. The protrusion 400 of the first gripper 310 may not press the peripheral area 120 of the electrode sheet 100. The second area A2 of the first gripper 310 may not press the peripheral area 120 of the electrode sheet 100. As above, the first gripper 310 may grip a partial area (an area excluding the peripheral area 120) of a top surface of the electrode sheet 100, not the entire area thereof. Accordingly, the present invention may prevent a positional defect (e.g., displacement) of the electrode sheet (or unit electrode) during a lamination process.

In addition, as illustrated in FIG. 4b, displacement caused by an assembly tolerance may occur in at least one of the first gripper 310 or a second gripper 320. Even when the displacement occurs in the first gripper 310 due to the assembly tolerance, the first gripper 310 may not be in contact with (or press) the peripheral area 120 of the electrode sheet 100, in which waves are most likely to occur. Accordingly, the present invention may prevent the positional defect (e.g., displacement) of the electrode sheet (or unit electrode) during the lamination process.

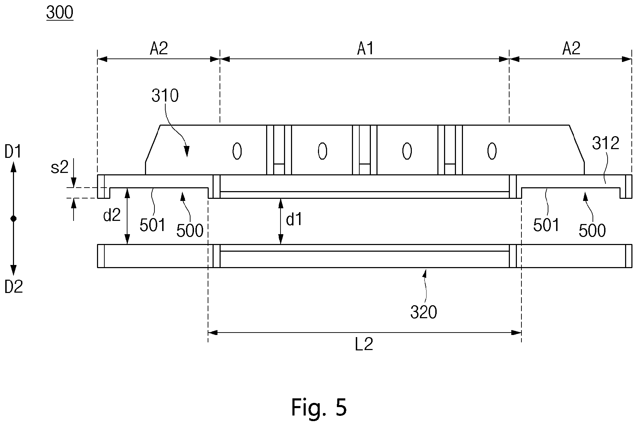

FIG. 5 is a view illustrating a gripper included in a cutting apparatus according to another embodiment of the present invention. The gripper illustrated in FIG. 5 may be substantially the same as the gripper 300 illustrated in FIGS. 3 to 4b except that an opening portion 500 of a first gripper 310 is provided in place of the protrusion 400 of the first gripper illustrated in FIGS. 3 to 4b. The description with reference to FIGS. 3 to 4b may apply to the description of remaining components except for the opening portion 500 of the first gripper 310, and duplicate description is omitted.

A first area A1 of the first gripper 310 illustrated in FIG. 5 may have at least a portion that further protrudes in the second direction D2 facing the second gripper 320 than a second area A2 does. The first gripper 310 may include the opening portion 500 disposed at at least a portion of the second area A2.

A bottom surface of a gripper plate 312, which is disposed on the first area A1 of the first gripper 310, and a top surface (e.g., a surface facing the first direction D1) of the second gripper 320 may be spaced a first spaced distance d1 from each other during the electrode cutting process. A bottom surface 501 provided by the opening portion 500 and the top surface of the second gripper 320 may be spaced a second spaced distance d2 from each other during the electrode cutting process. The first spaced distance d1 may be different from the second spaced distance d2. The first spaced distance d1 may be provided to be less than the second spaced distance d2. During the electrode cutting process, the first spaced distance d1 may have a size that corresponds to a thickness of an electrode sheet (e.g., the electrode sheet 100 in FIG. 2), and the second spaced distance d2 may have a thickness that is greater than a thickness of the electrode sheet.

A height difference s2 (or stepped portion) between the bottom surface 501 provided by the opening portion 500 and the gripper plate 312 disposed on the first area A1 of the first gripper 310 may correspond to a depth of the opening portion 500. The height difference s2 between the bottom surface 501 of the opening portion 500 and the gripper plate 312 disposed on the first area A1 of the first gripper 310 may be set in consideration of a thickness of a peripheral area of the electrode sheet. For example, the height difference s2 between the bottom surface 501 provided by the opening portion 500 and the gripper plate 312 disposed on the first area A1 of the first gripper 310 may be 0.4 mm to 0.6 mm.

The gripper plate 312 of the first gripper 310 may be in contact with a partial area of the electrode sheet, which is fixed between the first gripper 210 and the second gripper 220 during the process of cutting the electrode sheet. The first gripper 310 may press the central area other than the peripheral area of the electrode sheet in response to an operation of a cutter (e.g., the cutter 200 in FIG. 2). Due to the opening portion 500, the first gripper 310 may not be in contact with the peripheral area of the electrode sheet and may be in contact with the central area of the electrode sheet.

A gripper plate 312 of the first area A1, which further protrudes toward the second gripper 320 than the bottom surface 501 provided by the opening portion 500 does, may have a size that is less than a size of a unit electrode, which is cut by the cutter, and/or the gripper plate 312. The gripper plate 312 of the first area A1, which further protrudes than the bottom surface 501 provided by the opening portion 500 does, may have a length L2 that is less than a length of the unit electrode. As an example, the length L2 of the gripper plate 312 of the first area A1, which further protrudes than the bottom surface 501 provided by the opening portion 500 does, may be provided to be about half the length of the unit electrode.

A bottom surface of the gripper plate 312 disposed on the first area A1 of the first gripper 310 may be in contact with the electrode sheet during the electrode cutting process. The gripper plate 312 disposed on the second area A2 of the first gripper 320 may not be in contact with at least a portion of the electrode sheet due to the opening portion 500 during the electrode cutting process. The gripper plate 312 disposed on the second area A2 of the first gripper 320 may not be in contact with (or press) the peripheral area 120 of the electrode sheet 100, in which waves are most likely to occur.

As above, the first gripper 310 may grip a partial area (an area excluding the peripheral area 120) of a top surface of the electrode sheet 100, not the entire area thereof. Accordingly, the present invention may prevent a positional defect (e.g., displacement) of the electrode sheet (or unit electrode) during the lamination process.

According to an embodiment, on a partial area of the second area A2 of the first gripper 310, the gripper plate 312 may have a thickness that is less than a thickness of the gripper plate 312 disposed on the first area A1 as illustrated in FIG. 5. As illustrated in FIG. 5, the opening portion 500 may have a groove shape that is concave from a bottom surface (e.g., a surface facing the second direction D2) of the gripper plate 312 toward a top surface (e.g., a surface facing the first direction D1) of the gripper plate 312. On the remaining area of the second area A2 of the first gripper 310, the gripper plate 312 may have a thickness that is the same as that of the gripper plate 312 on the first area A1. In this case, the gripper plate 312 may be in contact with a portion of the peripheral area 120 of the electrode sheet 100, in which waves are most likely to occur, but the contact area between the gripper plate 312 and the electrode sheet may be minimized due to the opening portion 500. Accordingly, the positional defect (e.g., displacement) of the electrode sheet (or unit electrode) may be minimized during the lamination process.

According to another embodiment, on the entire area of the second area A2 of the first gripper 310, the gripper plate 312 may have a thickness that is less than a thickness of the gripper plate 312 disposed on the first area A1 due to the opening portion 500. In this case, the gripper plate 312 may not be in contact with the entirety of the peripheral area 120 of the electrode sheet 100, in which waves are most likely to occur. Accordingly, the positional defect (e.g., displacement) of the electrode sheet (or unit electrode) may be prevented during the lamination process.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

| | | | |
|---|---|---|---|
| 1: | Secondary battery | 10: | Electrode assembly |
| 100: | Electrode sheet | 200: | Cutter |
| 300: | Gripper | 400: | Protrusion |
| 500: | Opening portion | | |

## Claims

1. An apparatus for cutting an electrode, the apparatus comprising:
a cutter configured to cut an electrode sheet into unit electrodes; and
a first gripper and a second gripper that are disposed in front of the cutter to fix the electrode sheet at both sides, respectively, in response to an operation of the cutter,
wherein the first gripper comprises a first area and a second area disposed at at least one side of the first area,
wherein the first area of the first gripper further protrudes toward the second gripper than the second area does.

2. The apparatus of claim 1, wherein the first gripper presses a top surface of the electrode sheet, and
the second gripper presses a bottom surface of the electrode sheet.

3. The apparatus of claim 1, wherein the electrode sheet comprises a central area and a peripheral area disposed at at least one side of the central area,
wherein the first area of the first gripper presses the central area in addition to at least a portion of the peripheral area of the electrode sheet in response to an operation of the cutter.

4. The apparatus of claim 1, wherein the first gripper comprises a protrusion disposed at at least a portion of the first area and protruding in a direction facing the second gripper.

5. The apparatus of claim 4, wherein a height difference between a bottom surface of the protrusion and a bottom surface of the second area of the first gripper is in a range of 0.4 mm to 0.6 mm.

6. The apparatus of claim 4, wherein the protrusion has a length that is less than a length of each of the unit electrodes.

7. The apparatus of claim 1, wherein the first gripper comprises an opening portion that is disposed at the at least a portion of the second area and is concave in a direction opposite to a direction facing the second gripper.

8. The apparatus of claim 7, wherein a height difference between a bottom surface provided by the opening portion and a bottom surface of the first area of the first gripper is in a range of 4 mm to 6 mm.

9. A method for cutting an electrode, the method comprising:
pressing and fixing an electrode sheet at both sides by a first gripper and a second gripper, respectively; and
cutting the electrode sheet into unit electrodes by a cutter disposed behind the first gripper and the second gripper,
wherein the first gripper comprises a first area and a second area disposed at at least one side of the first area,
wherein the first area of the first gripper further protrudes toward the second gripper than the second area does.

10. The method of claim 9, wherein the electrode sheet comprises a central area and a peripheral area disposed at at least one side of the central area,
wherein the fixing of the electrode sheet comprises pressing the central area other than the peripheral area of the electrode sheet by a protrusion disposed on the first area of the first gripper.
